# EUROPÄISCHE PATENTSCHRIFT

(11) **EP 2 147 025 B1**
(45) Veröffentlichungstag und Bekanntmachung des Hinweises auf die Patenterteilung: **15.09.2010**
(21) Anmeldenummer: 08750016.1
(22) Anmeldetag: 05.05.2008
(51) Int. Cl.: C08F 20/00, C09D 133/00

(54) **VERFAHREN UND VORRICHTUNG ZUR LÖSUNGSMITTELFREIEN HERSTELLUNG VON ACRYLATHAFTKLEBEMASSEN**
METHOD AND DEVICE FOR THE SOLVENT-FREE PRODUCTION OF ACRYLATE ADHESIVE MASSES
PROCÉDÉ ET DISPOSITIF DE PRODUCTION, SANS UTILISATION DE SOLVANTS, DE MATIÈRES AUTO-ADHÉSIVES À BASE D'ACRYLATE

(30) Priorität: 11.05.2007 DE 102007022726
(43) Veröffentlichungstag der Anmeldung: 27.01.2010
(73) Patentinhaber: TESA SE, 20253 Hamburg (DE)
(72) Erfinder: NEUHAUS-STEINMETZ, Hermann, 22926 Ahrensburg (DE); HARDER, Christian, 22589 Hamburg (DE); KÖNIG, Sven, CH-4153 Reinach (CH); BURMEISTER, Axel, 21244 Buchholz (DE)
(86) Internationale Anmeldenummer: PCT/EP2008/055450
(87) Internationale Veröffentlichungsnummer: WO 2008/138786

(56) Entgegenhaltungen:
- US-A- 4 968 558

## Beschreibung

Die Erfindung betrifft ein Verfahren zur lösungsmittelfreien Herstellung von Acrylathaftklebemassen sowie eine zur kontinuierlichen Ausführung des Verfahrens geeignete Vorrichtung.

Verfahren zur Herstellung von Acrylathaftklebemassen sind seit langem bekannt. Allerdings werden nach einem Teil der bekannten Verfahren Lösungsmittel zur Polymerisation der Monomere verwendet, was gegenwärtig als nachteilig im Hinblick auf Umweltaspekte angesehen wird. DE 100 53 563 A1 beschreibt ein Verfahren zur Herstellung von Acrylathotmelts durch radikalische Polymerisation unter Verwendung eines Lösungsmittels. Nach dem Entfernen des Lösungsmittels in einem Doppelschneckenextruder werden dem Polymerisat Harze, Füllstoffe und Vernetzer beigemischt. Das Gemisch kann in einem Kanal beschichtet und getrocknet werden. Das Verfahren wird diskontinuierlich durchgeführt. Das Verfahren ist umweltschädlich und aufgrund der diskontinuierlichen Verfahrensweise teuer.

Bekannt ist ferner, die Monomere in einem Lösungsmittel zu polymerisieren und das Lösungsmittel erst nach dem Abmischen mit Harzen, Füllstoffen und Vernetzern zu entfernen, so dass eine lösungsmittelfreie Beschichtung mittels einer Düse, einer Walze oder eines Extruders möglich ist. Diese Verfahrensweise ist sowohl apparativ als auch zeitlich aufwendig.

WO 2002/092639 A1 beschreibt ein Verfahren zur Herstellung einer polymerisierten Haftklebemasse, bei dem Monomere oder Oligomere auf ein Substrat beschichtet werden und dort mittels eines Elektronenstrahls, der beschleunigte Elektronen erzeugt, polymerisiert werden. Das erhaltene Polymerisat weist jedoch einen hohen Anteil an Restmonomeren auf, die gesundheitsschädlich sein können. Außerdem dürfen die Polymerisate für die Herstellung von Haftklebemassen nur geringe Mengen an Füllstoffen und Harzen enthalten.

Darüber hinaus sind weitere Verfahren zur UV-Polymerisation von Acrylatklebemassen auf einem bahnförmigen Träger bekannt. Bei der Polymerisation auf einer Bahn lässt sich die Reaktionswärme bei der Polymerisation gut abführen. Bei allen beschriebenen Verfahren zur UV-Polymerisation auf einer Bahn hat das Polymerisat nach der UV-Polymerisation seine endgültige chemische Zusammensetzung erhalten. Allenfalls wird noch eine Vernetzung im direkten Anschluss an die Polymerisation auf der gleichen Bahn durchgeführt. Möglichkeiten, die polymerisierte Masse über das Entfernen von der Bahn einer direkten Weiterverarbeitung in Aggregaten zuzuführen, werden nicht gefunden und auch nicht angedacht.

Bei einer thermisch isolierten Masse würde die Polymerisationswärme zu einer Temperaturerhöhung der Masse um 200 °C und mehr führen.

Bei der lösungsmittelfreien Polymerisation in Kesseln oder anderen Reaktoren ist die Wärmeabfuhr von höherviskosen Substanzen mit einer Reaktionswärme, wie bei der Polymerisation von Acrylaten, problematisch. Daraus folgende Einschränkungen bei der Auswahl der Massebestandteile und bei der Prozessführung limitieren die Eigenschaften der Klebemasse im späteren Produkt.

Aufgabe der Erfindung ist es, die Nachteile nach dem Stand der Technik zu beseitigen. Es soll insbesondere ein Verfahren zur lösungsmittelfreien Herstellung einer unvernetzten oder nur gering vernetzten Acrylathaftklebemasse angegeben werden, das kontinuierlich durchgeführt werden kann und zudem wenig zeit- und kostenintensiv ist, und das die freie Zugabe von Komponenten wie Harze, Alterungsschutzmittel, Fotoinitiatoren zur späteren UV-Vernetzung und weiteren Bestandteilen zwischen der durchgeführten Polymerisation auf einer Bahn und der kontinuierlichen Weiterverarbeitung erlaubt.

Diese Aufgabe wird durch die Merkmale der Ansprüche 1 und 20 gelöst. Zweckmäßige Ausgestaltungen der Erfindung ergeben sich aus den Merkmalen der Ansprüche 2 bis 19 sowie 21 bis 33.

Nach Maßgabe der Erfindung ist ein Verfahren zur lösungsmittelfreien Herstellung von Acrylathaftklebernassen vorgesehen, umfassend
(a) kontinuierliches Beschichten eines Gemisches, enthaltend einen oder mehrere Photoinitiatoren sowie eine Monomermischung, die
   (i) 70 bis 100 Gew.-% Verbindungen aus der Gruppe der (Meth-)Acrylsäure sowie deren Derivate entsprechend der folgenden allgemeinen Formel 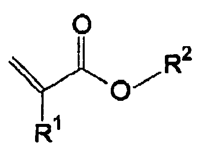 wobei R₁H oder CH₃ darstellt und R₂ eine Alkylkette mit 2 bis 20 Kohlenstoffatomen darstellt;
   (ii) 0 bis 30 Gew.% olefinisch ungesättigter Monomere mit funktionellen Gruppen; und
   (iii) gegebenenfalls weitere Komponenten enthält,
      oder ein Präpolymer dieser Monomermischung auf einen Prozessträger;
(b) Polymerisieren des beschichteten Gemisches durch Bestrahlen der beschichteten Abschnitte des Prozessträgers mit sichtbarem oder ultraviolettem Licht;
(c) Trennen des Polymerisates von dem Prozessträger und Formen des Polymerisates;
(d) Überführen des Polymerisates in eine Mischvorrichtung;
(e) Mischen des Polymerisates mit weiteren Komponenten in einer Mischvorrichtung; und
(f) Weiterverarbeitung des in Schritt (e) erhaltenen Polymerisat-Komponenten-Gemisches.

Das Verfahren kann kontinuierlich durchgeführt werden. Das erfindungsgemäße Verfahren ermöglicht somit die kontinuierliche, lösungsmittelfreie Herstellung von Acrylathaftklebemassen unter zeitlich und apparativ kostengünstigen Bedingungen. Die Möglichkeit, nach der Polymerisation in Schritt (b) weitere Komponenten zuzumischen, erlaubt deutlich höhere Mengen an Füllstoffen und Harzen. Die Harze und Füllstoffe brauchen nicht transparent für UV-Strahlung zu sein.

Das erfindungsgemäße Verfahren umfasst das Beschichten eines Gemisches aus Acrylatmonomeren oder -oligomeren einerseits sowie zumindest eines Photoinitiators andererseits auf einen Prozessträger. Das Gemisch wird mittels UV-Strahlung polymerisiert, wobei die Polymerisation vorzugsweise in einer inerten Atmosphäre durchgeführt wird.

Vorzugsweise wird die Inertisierung ereicht, indem zwischen zwei Trennfolien beschichtet wird. Die zweite obere Trennfolie wird vorzugsweise nach der UV-Polymerisation wieder abgezogen. Das so erhaltene Polymerisat wird mittels einer geeigneten Vorrichtung von dem Prozessträger getrennt und zu einem Strang geformt. Der Strang wird in einem kontinuierlich arbeitenden Mischaggregat mit weiteren Komponenten wie Harzen, Füllstoffen und Vernetzern vermischt. Das erhaltene Polymerisat-Komponenten-Gemisch kann dann weiter verarbeitet werden, beispielsweise indem es auf ein Trägermaterial für ein Haftklebeband beschichtet wird. Das Gemisch sollte eine streichfähige Masse sein.

Vor Ausführung von Schritt (a) des erfindungsgemäßen Verfahrens wird die Monomermischung aus den Komponenten (i), (ii) und optional (iii) in einer Ausführungsform der Erfindung präpolymerisiert, um eine streichfähige Masse zu erhalten, die dann in Schritt (a) auf den Prozessträger aufgebracht wird. Dazu kann die Monomermischung einen zweiten Photoinitiator enthalten. Die Präpolymerisation wird vorzugsweise kontinuierlich in einem Fallstromreaktor durchgeführt. In einem solchen kontinuierlichen Reaktor fällt die Monomermischung in Bahnform aus einer Schlitzdüse innerhalb des Reaktors an einem Fenster vorbei, durch welches von außen UV-Licht strahlt. Typischerweise befindet sich ein Fallstromreaktor in einer Schlaufe mit mehrfachem Massedurchfluss wie der Entnahmemassefluss. Eine solche Einheit kann die UV-Polymerisation auf der Bahn auch direkt über einen Schlauch mit anpolymerisierter Masse versorgen. Über ein Mischaggregat können dabei auch zusätzliche Komponenten in die noch niederviskose Masse eingemischt werden.

Alternativ kann die Präpolymerisation auch in einem Extruder mithilfe eines niedrig dosierten thermischen Vernetzers erfolgen.

Das Präpolymer aus den Komponenten (i), (ii) und optional (iii) wird gemeinsam mit einem ersten Photoinitiator auf den Prozessträger aufgebracht.

Alternativ können die Komponenten (i), (ii) und optional (iii) ohne vorherige Teilpolymerisation auf den Prozessträger gemeinsam mit dem zweiten Photoinitiator aufgebracht werden. In diesem Fall ist kein zweiter Photoinitiator als Komponente (iii) erforderlich.

Für das erfindungsgemäße Verfahren zur lösungsmittelfreien Herstellung von Haftklebemassen werden als Komponente (i) bevorzugt 2-Ethylhexylacrylat, Methylacrylat, Tertbutylacrylat, Acrylamide, substituierte Acrylamide sowie Gemische dieser Verbindungen eingesetzt. Besonders bevorzugt ist als Komponente (i) ein Gemisch aus 2-Ethylhexylacrylat und Methylacrylat (EHA/BA).

Als Komponente (ii) werden olefinisch ungesättigte Verbindungen, welche bevorzugt zwei funktionelle Gruppen enthalten, mit einem Anteil von 0 bis 30 Gewichtsprozent eingesetzt. Beispiele für solche olefinisch ungesättigten Verbindungen sind (Meth)acrylsäure und deren Methylester, Methacrylsäurederivate wie (Meth)acrylamide, N-substituierte (Meth)acrylamide, Dimethytacrylsäure, Trichloracrylsäure, Hydroxyalkyl(meth)acrylat, aminogruppenhaltige (Meth)acrylate, hydroxygruppenhaltige (Meth)acrylate, besonders bevorzugt 2-Hydroxyethyl(meth)acrylat, 2-Hydroxypropyl(meth)acrylat, und/oder 4-Hydroxybutyl(meth)acrylat, Acrylonitril, weiterhin 3-Vinylverbindungen wie Vinylester, Vinylether, Vinylhalogenide, Vinylidenhalogenide und Nitrite von ethylenisch ungesättigten Kohlenwasserstoffen, Vinylverbindungen mit aromatischen Cyclen und Heterocyclen in a-Stellung, insbesondere Vinylessigsäure und Vinylacetat, N-Vinylformamid, Vinylpyridin, Ethylvinylether, Vinylchlorid, Vinylidenchlorid, außerdem Maleinsäureanhydrid, Styrol, Styrol-Verbindungen, β-Acryloyloxypropionsäure, Fumarsäure, Crotonsäure, Aconitsäure und/oder Itaconsäure; die vorstehende Aufzählung ist nur beispielhaft und nicht abschließend. Besonders bevorzugt sind Acrylsäure, Hydroxymethylacrylat, Hydroxypropylacrylat, Fumarsäure und Maleinsäureanhydrid.

Als erste und zweite Photoinitiatoren können alle Norrish-Typ-I-Photoinitiatoren (im Folgenden auch kurz als Typ-1-Photoinitiatoren bezeichnet) eingesetzt werden. Der Anteil der Photoinitiatoren liegt, bezogen auf die eingesetzten Monomere, vorteilhaft zwischen 0,05 und 2, bevorzugt zwischen 0,1 und 1 Gewichtsprozent. Bevorzugt kann zum Beispiel Irgacure 901 (Firma Ciba Geigy) verwendet werden. Auch Photoinitiatorengemische sind im erfindungsgemäßen Sinne sehr zur Initiierung geeignet. Sehr bevorzugt werden Photoinitiatoren mit langwelliger Absorption eingesetzt, da diese eine große Eindringtiefe besitzen und somit leichter die Monomer/Polymer-Mischung durchdringen. Somit können größere Schichtdicken polymerisiert werden.

Eine lineare Polymerisation wird bevorzugt mit einem Norrish-Typ-I-Photoinitiator gestartet. Norrish-Typ-II-Photoinitiatoren (Typ-II-Photoinitiatoren) verursachen mehr Pfropfreaktionen (zur Herstellung von verzweigten Polyacrylaten) und werden daher bevorzugt im Verlauf der UV-Polymerisation hinzudosiert. Dennoch können auch UV-Polymerisationen mit Typ-II-Photoinitiatoren gestartet werden.

Als Norrish-Typ-I-Photoinitiatoren werden solche Verbindungen bezeichnet, welche bei Bestrahlung mit Licht gemäß einer Norrish-Typ-I-Reaktion zerfallen. Dabei handelt es sich klassisch um eine Photofragmentierung einer Carbonyl-Verbindung, bei der die Bindung zu einem in α-Stellung zur Carbonylgruppe befindlichen Kohlenstoffatom radikalisch aufgespalten wird (α-Spaltung), so dass ein Acyl- und ein Alkyl-Radikal entstehen. Im erfindungsgemäßen Sinne werden zu den Norrish-Photoinitiatoren auch solche gezählt, bei denen statt der Carbonyl-Gruppe eine andere funktionelle Gruppe vorhanden ist und die Spaltung die Bindung zwischen dieser Gruppe und einem ocständigen Kohlenstoffatom betrifft.

Norrish-Typ-II-Photoinitiatoren zerfallen bei Bestrahlung mit Licht gemäß einer Norrish Typ-II-Reaktion unter Wasserstoff-Abstraktion, es handelt sich dabei um eine intramolekulare Reaktion.

Bei aliphatischen Ketonen kann dabei ein Wasserstoff aus der y-Position zu einer entsprechend der oben dargestellten funktionellen Gruppe abgespalten werden.

Erfindungsgemäße Beispiele für Norrish-Photoinitiatoren beider Typen sind Benzophenon-, Acetophenon-, Benzil-, Benzoin-, Hydroxyalkylphenon-, Phenylcyclohexylketon-, Anthrachinon-, Thioxanthon-, Triazin-, oder Fluorenonderivate, ohne dass diese Aufzählung abschließend ist. Zu den Typ-I-Initiatoren gehören insbesondere aromatische Carbonylverbindungen, wie Benzoinderivate, Benzilketale und Acetophenonderivate. Typ-II-Photoinitiatoren sind besonders aromatische Ketone, wie zum Beispiel Benzophenon, Benzil oder Thioxanthone.

Gemäß Schritt (a) wird das Gemisch, umfassend den ersten Photoinitiator und das Monomergemisch oder das Präpolymer, vorzugsweise mittels eines rotierenden Streichbalkens kontinuierlich zwischen einem Prozessträger und einer Abdecktrennfolie aufgebracht, die mit einer vorgegebenen Geschwindigkeit kontinuierlich von Abwickelwalzen abgewickelt und über Walzen zu einer Aufwickelwalze geführt werden. Nach dem Aufstreichen des Gemisches werden die beschichteten Abschnitte des Prozessträgers durch eine UV-Bestrahlungseinheit geführt (Schritt (b)).

Alternativ zur Verwendung einer Abdecktrennfolie kann das Gemisch in einer Inertgasatmosphäre, wie zum Beispiel Stickstoff, Helium oder Argon, mit UV-Licht bestrahlt werden. Der Prozessträger ist vorzugsweise eine Trennfolie, die nachfolgend auch als erste Trennfolie bezeichnet wird.

Als Prozessträger können beispielsweise Folien (Polyester, PET, PE, PP, BOPP, PVC), Vliese, Schäume, Gewebe und Gewebefolien sowie Trennpapier (Glassine, HDPE, LDPE) verwendet werden. Folien sind bevorzugt. Mindestens die obere Trennfolie muss ausreichend für UV-Strahlen durchlässig sein. Bei einer UV-Bestrahlung auch von der Unterseite der Bahn muss auch die erste Trennfolie transparent, für den UV-Wellenbereich in dem die Photoinitiatoren empfindlich sind, sein.

Je nach eingesetztem Photoinitiator wählt man die einstrahlende Wellenlänge zwischen 200 und 450 nm. Beispielsweise kann die UV-Bestrahlungseinrichtung Quecksilber-Hochdruck- oder -Mitteldrucklampen mit einer Leistung von zum Beispiel 80 bis 200 W/cm oder mehr umfassen.

Durch die Reaktionswärme bei der UV-Polymerisation erwärmt sich das Gemisch sehr stark. Zur Vermeidung des schlagartigen Freiwerdens der gesamten Reaktionswärme und auch zum Erreichen von langen Polymerketten werden darum Vorteilhafterweise leistungsschwache Quecksilberniederdruckröhren mit auf die verwendeten Fotoinitiatoren zugeschnittenen UV-Wellenlängen verwendet. Zur UV-Polymerisation werden mehrere Quecksilberniederdruck-UV-Röhren in Bahnrichtung hintereinander angeordnet. Zur Kühlung werden Vorteilhafterweise UV-Röhren zwischen den Luftdüsen eines Kühlkanals angeordnet.

Zum Erreichen eines weitgehend vollständigen Umsatzes über die Tiefe des Gemisches können auf beiden Seiten der Bahn UV-Röhren angebracht sein. Die Kettenlänge der Polymere wird über die Intensität der UV-Strahlung, der Prozesstemperatur, dem Abstand zwischen den UV-Röhren, der Bahngeschwindigkeit und dem Gehalt an Fotoinitiatoren eingestellt. Die Prozessparameter und die Rezeptur werden Vorteilhafterweise so gewählt, dass sich möglichst wenige Vernetzungen zwischen den Polymerketten bilden. Vernetzte Massen lassen sich schwer weiterverarbeiten und beschichten.

Vorteilhaft wird die Polymerisation zumindest bis zu einem Umsatz von 98 % der Monomere durchgeführt. Es kann vorgesehen sein, dass nicht umgesetzte Monomere oder Oligomere nach der UV-Bestrahlung mittels einer dazu bestimmten Vorrichtung entfernt werden.

In einer Ausführungsform der Erfindung kann vorgesehen sein, dass die beschichteten Abschnitte des Prozessträgers mit einer zweiten Trennfolie bedeckt werden. Diese zweite Trennfolie wird nach Passieren der UV-Bestrahlungseinheit entfernt. Die zweite Trennfolie wird kontinuierlich von einer zweiten Abwickelwalze abgewickelt und über Walzen zu einer zweiten Aufwickelwalze geführt. Beispiele für die zweite Trennfolie sind die Beispiele für den Prozessträger, wobei ebenso Folien bevorzugt sind.

Die UV-Bestrahlungseinrichtung weist vorzugsweise einen ersten ungekühlten Abschnitt auf sowie einen zweiten gekühlten Abschnitt.

In Schritt (c) wird das mittels der UV-Strahlung erhaltene Polymer auf dem Prozessträger zu einem Strang geformt. Dazu wird eine Strangformeinrichtung verwendet. Nach der Strangbildung wird der Prozessträger entfernt und auf einer Aufwickelrolle aufgewickelt. Der Strang aus dem Polymerisat wird dann einer Mischeinrichtung zugeführt (Schritt (d)), beispielsweise einem Doppelschneckenextruder (DSE) oder einem Planetwalzenextruder (PWE). Dort wird der Strang mit weiteren Komponenten vermischt, beispielsweise Harzen, Füllstoffen und/oder Vernetzern.

Harze können dem Polymerisat insbesondere zur Verbesserung der klebtechnischen Eigenschaften beigemischt werden. Als Harze sind beispielsweise Terpen-, Terpenphenolharze, C₅- und C₉-Kohlenwasserstoffharze, Pinen-, Inden- und Kolophoniumharze, auch in Kombination miteinander, einsetzbar. Prinzipiell lassen sich aber alle in dem entsprechenden Polymerisat löslichen Harze verwenden, wobei insbesondere auf alle aliphatischen, aromatischen, alkylaromatischen Kohlenwasserstoffharze, Kohlenwasserstoffharze auf Basis reiner Monomere, hydrierte Kohlenwasserstoffharze, funktionelle Kohlenwasserstoffharze sowie Naturharze verwiesen wird. Besonders bevorzugt sind Terpenphenolharze, zum Beispiel DT 110, hergestellt von DRT, Kohlenwasserstoffharze und Kolophoniumharze.

Außerdem können verschiedene Füllstoffe (beispielsweise Ruß, Kreide, Aerosil, Ti0₂, Fasern, Voll- oder Hohlkugeln aus Glas oder anderen Materialien), Keimbildner, Compoundierungsmittel, Alterungsschutzmittel, Lichtschutzmittel, Ozonschutzmittel, Fettsäuren, Weichmacher, Keimbildner, Blähmittel, Beschleuniger und/oder Füllmittel zugesetzt werden. Besonders bevorzugte Füllstoffe sind Kreide, Aerosil, Fasern und Glasvollkugeln.

Für einige Anwendungen als Haftklebemasse kann es erforderlich sein, das Polymerisat in dem Polymerisat-Komponenten-Gemisch zu vernetzen, insbesondere um die Kohäsion zu steigern. Daher ist es für das erfindungsgemäße Verfahren sehr günstig, dem Polymerisat Vernetzer zuzusetzen.

Als Vernetzer lassen sich alle dem Fachmann bekannten bi- oder multifunktionellen Verbindungen einsetzen, deren funktionelle Gruppen mit den Polyacrylaten eine Verknüpfungsreaktion eingehen können, insbesondere Polymerisations-, Polykondensations- oder Polyadditionsreaktionen. Insbesondere werden bi- oder multifunktionelle Acrylate und/oder Methacrylate, bi- oder multifunktionelle Isocyanate oder bi- oder multifunktionelle Epoxide eingesetzt. Zur UV- oder ES-Härtung sind multifunktionelle Acrylate bevorzugt.

Ebenso können unter UV-Strahlung vernetzende Substanzen wie zum Beispiel UV-Photoinitiatoren beigemischt werden. Als Photoinitiatoren können Benzophenon-, Acetophenon-, Benzil-, Benzoin-, Hydroxyalkylphenon-, Phenylcyclohexylketon-, Anthrachinon-, Thioxanthon-, Triazin-, oder Fluorenonderivate eingesetzt werden, wobei diese Aufzählung nicht abschließend ist. Bevorzugt werden Typ-II-Photoinitiatoren eingesetzt.

Weiterhin können auch alle dem Fachmann bekannten Promotoren dem Polymerisat beigemischt werden, die die UV-Vernetzung effizienter gestalten könnten.

Bevorzugte Vernetzer sind Metallchelate, beispielsweise Aluminiumchelate und Titanchelate, Isocyanate; blockierungsfreie Isocyanate, Phenolharze, Melaminharze, Epoxide und UV- oder ES-Härter. Die Metallchelate liegen vorzugsweise in einer Menge von 0,1 bis 1, stärker bevorzugt 0,1 bis 0,5, bezogen auf das Gewicht des Polymerisat-Komponenten-Gemisches vor.

Aus dem nach dem erfindungsgemäßen Verfahren hergestellten Polymerisat-Komponenten-Gemisch kann eine Haftklebemasse erhalten werden, die besonders für die Herstellung von beispielsweise Klebebändern geeignet ist. Hierfür wird das Polymerisat-Komponenten-Gemisch auf ein Trägermaterial aufgetragen. Als Trägermaterial, beispielsweise für Klebebänder, lassen sich hierbei dem Fachmann geläufigen und üblichen Materialien wie Folien (Polyester, PET, PE, PP, BOPP, PVC), Vliese, Schäume, Gewebe und Gewebefolien sowie Trennpapier (Glassine, HDPE, LDPE) verwenden. Diese Aufzählung ist nicht abschließend.

Das Auftragen des Polymerisat-Komponenten-Gemisches auf das Trägermaterial kann mittels einer Düse oder eines Walzenauftragswerkes erfolgen. Die Vernetzung kann dann nach dem Auftragen bevorzugt direkt auf dem Trägermaterial durchgeführt werden, bevorzugt durch UV-Strahlung oder durch ionisierende Strahlung, wie zum Beispiel Elektronenstrahlung. Weiterhin kann unter besonderen Umständen auch thermisch vernetzt werden.

Eine Vorrichtung zur Ausführung des erfindungsgemäßen Verfahrens umfasst
(a) eine Einrichtung zum kontinuierlichen Beschichten eines Gemisches auf den Prozessträger
(b) zumindest eine UV-Bestrahlungseinrichtung zum Polymerisieren des beschichteten Gemisches durch Bestrahlen der beschichteten Abschnitte des Prozessträgers mit ultraviolettem Licht;
(c) eine Einrichtung zum Trennen des in Schritt (b) erhaltenen Polymerisates von dem Prozessträger,
(d) eine Einrichtung zum Überführen des Polymerisates in eine Mischvorrichtung; und
(e) eine Einrichtung zum Mischen des Polymerisates mit weiteren Komponenten.

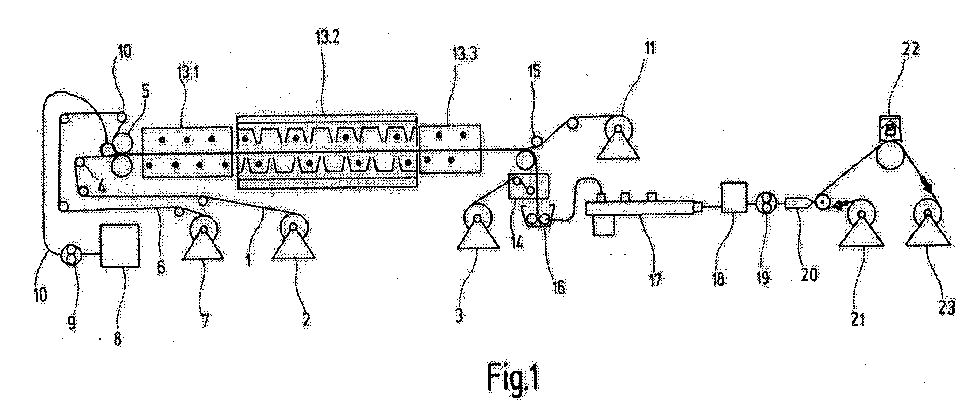

Die Erfindung wird nachstehend unter Bezugnahme auf die Zeichnung ausführlicher erläutert. Dabei zeigt Fig. 1 eine schematische Darstellung einer Vorrichtung zur Ausführung von Schritt (a) bis (e) des erfindungsgemäßen Verfahrens.

### Beispiele

### Beispiel 1

Fig. 1 beschreibt ein Beispiel für die lösungsmittelfreie Herstellung von Acrylatklebemassen. Eine erste Trennfolie 1, die als Prozessträger dient, wird von einer Abwickelrolle 2 kontinuierlich abgewickelt und nach dem Passieren von Einrichtungen der Vorrichtung auf eine Aufwickelwalze 3 aufgerollt. Der von der Trennfolie 1 zurückgelegte Weg (Pfeil A) wird von Walzen und Rollen 4 bestimmt. Auf die Trennfolie 1 wird mittels eines Streichbalkens 5 das in Schritt (a) des erfindungsgemäßen Verfahrens definierte Gemisch gestrichen. Dazu wird das Gemisch mit einer geregelten Zahnradpumpe 9 aus einem Container 8 durch einen Schlauch 10 in das Auftragswerk 3 auf die Trennfolie 1 gepumpt.

Eine zweite Trennfolie 6 wird unter dem oberen Streichbalken mit durch das Auftragswerk 3 geführt, so dass sich das Gemisch hinter dem Auftragswerk 3 zwischen den beiden Trennfolien befindet. Die zweite Trennfolie 6 wird ebenso wie die Trennfolie 1 von einer Abwickelfolie 7 kontinuierlich abgewickelt, über Walzen und Rollen geführt und schließlich nach der UV-Polymerisation auf einer Aufwickelrolle 9 aufgewickelt. Der Spalt zwischen den Streichbalken ist so eingestellt, dass das Polymerisat eine Schichtstärke von 2 mm bei einer Beschichtungsbreite von 50 cm hat.

Das so erhaltene dreilagige Laminat aus Trennfolie 1, aufgestrichenem Gemisch und Trennfolie 6 wird anschließend durch die UV-Bestrahlungseinrichtung 13 geführt. Durch die beidseitige Abdeckung des Gemisches mit den Trennfolien wird eine Inertisierung des Gemisches gegen Luftsauerstoff während der UV-Bestrahlung erreicht. Durch die UV-Bestrahlung wird das Gemisch zwischen den beiden Trennfolien polymerisiert. Zur UV-Polymerisation sind mehrere UV-Röhren in Bahnrichtung hintereinander angeordnet.

Durch die Reaktionswärme bei der UV-Polymerisation erwärmt sich das Gemisch sehr stark. Zur Vermeidung des schlagartigen Freiwerdens der gesamten Reaktionswärme und auch zum Erreichen von langen Polymerketten werden im Verhältnis zu Quecksilbermitteldruckröhren sehr leistungsschwache Quecksilberniederdruckröhren mit auf die verwendeten Fotoinitiatoren zugeschnittenen UV-Wellenlängen verwendet; in diesem Fall "Cleo Performance R" Sonnenbankröhren von Philips mit einer Hauptwellenlänge von 355 nm.

Die Bestrahlungseinrichtung 13 weist einen ersten Abschnitt 13.1 auf, dessen Kanal das dreilagige Laminat ohne Kühlung passiert. An den ersten Abschnitt 13.1 schließt sich ein zweiter Abschnitt 13.2 an, dessen Kanal gekühlt ist. Hier sind die UV-Röhren zwischen den, zur Kühlung verwendeten Luftdüsen angeordnet. An den zweiten Abschnitt 13.2 schließt sich ein dritter Abschnitt 13.3 an der wieder ungekühlt ist. Der wesentliche Teil der Polymerisation wird in Abschnitt 13.2 abgeschlossen. In Abschnitt 13.3 wird nur noch wenig Reaktionswärme frei und es wird ein Polymerisationsumsatz bis zu einem Restmonomergehalt von 0,8 bis 3 % erreicht.

Zum Erreichen eines weitgehend vollständigen Umsatzes über die Tiefe des Gemisches sind auf beiden Seiten der Bahn UV-Röhren angebracht. Die Kettenlänge der Polymere wird über die Intensität der UV-Strahlung, der Prozesstemperatur, dem Abstand zwischen den UV-Röhren, der Bahngeschwindigkeit und dem Gehalt an Fotoinitiatoren eingestellt. Die Prozessparameter und die Rezeptur sind so gewählt, dass sich möglichst wenige Vernetzungen zwischen den Polymerketten bilden.

Die als Trennfolie 1 verwendete silikonisierte PET-Folie und die als Trennfolie 6 verwendete silikonisierte Polypropylenfolie sind für den verwendeten UV-Wellenlängenbereich transparent. Sie werden mehrfach verwendet.

Nach der Polymerisation wird die zweite Trennfolie 6 abgezogen und mit dem Aufwickler 9 aufgerollt. Unterhalb einer Walze 14, die das nur noch zweilagige Laminat aus Trennfolie 1 und dem Polymerisat umlenkt, befindet sich ein offener Zweischneckenkneter 16. Das Polymerisat wird von den Schecken eingezogen und dadurch von der Trennfolie abgezogen. Im Zweischneckenkneter 16 wird das Polymerisat zur Erniedrigung der Viskosität erwärmt und über eine Austragsschecke in einen Mischextruder 17 geführt.

In dem ersten Teil des Mischextruders 17 werden noch vorhandene Restmonomere abgezogen. In den nächsten Teilen werden Harze, Alterungsschutzmittel und UV-Vernetzer zugegeben. Der folgende temperierte Puffer 18, mit einer kurzen Verweilzeit der Klebemasse, entkoppelt die Acrylatklebemasseherstellung von der nachfolgenden Beschichtungsanlage für Klebebänder.

Zur Beschichtung eines PP-Trägers mit einer silikonisierten Rückseite wird die Klebemasse mithilfe einer im Boden des Puffers angebrachten Zahnradpumpe 19 in eine Breitschlitzdüse 20 gefördert. Die Schichtdicke der Klebemasse von 25 µm ergibt sich aus dem Massedurchsatz an der Zahnradpumpe 19, der Düsenbreite und der Bahngeschwindigkeit der Beschichtungsanlage. Die Bahngeschwindigkeit ist auf den von der UV-Polymerisation gelieferten Massefluss abgestimmt. Nach der Beschichtung erfolgt eine Vernetzung mit einer UVC-Dosis von 45 mJ/cm² durch die UV-Einheit 22 und das anschließende Aufwickeln mit dem Aufwickler 23.

### Beispiel 2

Alle Schritte sind identisch zu Beispiel 1. Jedoch wird anstelle der UV-Vernetzungseinheit 22 eine Elektronenstrahlanlage zur Vernetzung eingesetzt und es wird ein doppelseitiges Klebeband mit einem 12 µm PET-Träger und zwei Masseschichten mit je 150 µm Schichtdicke hergestellt. Dazu erfolgt die Beschichtung in einem ersten Arbeitsgang auf ein doppelseitiges Trennpapier. Nach der anschließenden Elektronenbestrahlung mit einer Dosis von 41 kGy bei einer Beschleunigungsspannung von 137 kV wird vor dem Aufwickeln der 12 µm dicke PET-Träger auf die Klebeseite laminiert (nicht eingezeichnet). In einem zweiten Arbeitsgang erfolgt dann die Beschichtung auf die noch offene Seite des Trägers und eine Elektronenbestrahlung mit 45 kGy bei 176 kV. Die Elektronenstrahlanlage hat ein Vakuumfenster aus Titan mit einer Dicke von 9 µm und der Luftspalt zwischen Vakuumfenster und Produktoberfläche beträgt 15 mm. Die Bestrahlungskammer wird mit Stickstoff inertisiert.

### Beispiel 3

Alle Schritte sind identisch zu Beispiel 1. Jedoch ist der Zweischneckenkneter 16 nicht vorhanden. Dafür wird das Polymerisat über eine antiadhäsive Walze von der Trennfolie 1 abgezogen und anschließend durch eine quadratischen Öffnung von 4 x 4 cm, die von einer Anordnung aus vier angetriebenen antiadhäsiven Walzen gebildet wird, über weitere formende antiadhäsive Walzen in den Mischextruder 17 eingezogen.

### Beispiel 4

Alle Schritte sind identisch zu Beispiel 1. Jedoch befindet hinter dem dritten Abschnitt 13.3 der UV-Bestrahlungseinrichtung 13 noch ein leistungsstarker dotierter Quecksilbermitteldruckstrahler, um den Restmonomergehalt auf ein erreichbares Minimum zu bringen.

### Bezugszeichenliste

- 1: erste Trennfolie (Prozessträger)
- 2: Abwickelwalze für Trennfolie 1
- 3: Aufwickelwalze für Trennfolie 1
- 4: Führungsrollen und -walzen für Trennfolie 1
- 5: Streichbalken
- 6: zweite Trennfolie
- 7: Abwickelwalze für Trennfolie 6
- 8: Massecontainer für Präpolymerisat
- 9: Zahnradpumpe für Präpolymerisat
- 10: Masseschlauch
- 11: Aufwickelwalze für Trennfolie 6
- 12: Führungsrollen und -walzen für Trennfolie 6
- 13: UV-Bestrahlungseinrichtung
- 13.1: erster Abschnitt der UV-Bestrahlungseinrichtung
- 13.2: zweiter Abschnitt der UV-Bestrahlungseinrichtung
- 13.2: dritter Abschnitt der UV-Bestrahlungseinrichtung
- 14: Einrichtung zum Abtrennen der Trennfolie 6
- 15: Einrichtung zum Abtrennen der Trennfolie 1 (Umlenkwalze)
- 16: offener Zweischneckenkneter zum Einziehen und Weiterfördern des Polymerisates
- 17: Mischaggregat zum Bilden des Polymerisat-Komponenten-Gemisches
- 18: Massepuffer zum Entkoppeln der Masseströme
- 19: Zahnradpumpe
- 20: Breitschlitzdüse für die Beschichtung
- 21: Abwicklung Klebebandträger
- 22: UV-Vernetzungseinheit
- 23: Klebebandaufwicklung

## Patentansprüche

1. Verfahren zur lösungsmittelfreien Herstellung von Acrylathaftklebemassen, umfassend
(a) kontinuierliches Beschichten eines Gemisches, enthaltend einen oder mehrere Photoinitiatoren sowie eine Monomermischung, die
(i) 70 bis 100 Gew.-% Verbindungen aus der Gruppe der (Meth-)Acrylsäure sowie deren Derivate entsprechend der folgenden allgemeinen Formel 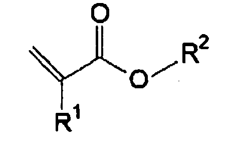 wobei R₁ H oder CH₃ darstellt und R₂ eine Alkylkette mit 2 bis 20 Kohlenstoffatomen darstellt;
(ii) 0 bis 30 Gew.% olefinisch ungesättigter Monomere mit funktionellen Gruppen; und
(iii) gegebenenfalls weitere Komponenten enthält,
oder ein Präpolymer dieser Monomermischung auf einen Prozessträger;
(b) Polymerisieren des beschichteten Gemisches durch Bestrahlen der beschichteten Abschnitte des Prozessträgers mit sichtbarem oder ultraviolettem Licht;
(c) Trennen des Polymerisates von dem Prozessträger und Formen des Polymerisates;
(d) Überführen des Polymerisates in eine Mischvorrichtung;
(e) Mischen des Polymerisates mit weiteren Komponenten wie Harzen, Füllstoffen, Vernetzern und Gemischen in einer Mischvorrichtung; und
(f) Weiterverarbeitung des in Schritt (e) erhaltenen Polymerisat-Komponenten-Gemisches.

2. Verfahren nach Anspruch 1, **dadurch gekennzeichnet, dass** der erste Photoinitiator in einem Anteil von 0,05 bis 2 Gew.-%, vorzugsweise von 0,1 bis 1 Gew.% bezogen auf die Monomermischung eingesetzt wird.

3. Verfahren nach Anspruch 1 oder 2, **dadurch gekennzeichnet, dass** das Präpolymerisat aus dem Monomergemisch hergestellt wird, wobei das Monomergemisch als weitere Komponente (iii) einen zweiten Photoinitiator enthält, wobei das Präpolymerisat vorzugsweise in einem Fallstromreaktor hergestellt wird.

4. Verfahren nach einem der vorstehenden Ansprüche, **dadurch gekennzeichnet, dass** die Viskosität des Gemisches, das in Schritt (a) auf den Prozessträger aufgebracht wird, so eingestellt wird, dass es streichfähig ist.

5. Verfahren nach einem der vorstehenden Ansprüche, **dadurch gekennzeichnet, dass** Schritt (b) in einer inerten Atmosphäre durchgeführt wird.

6. Verfahren nach einem der vorstehenden Ansprüche, **dadurch gekennzeichnet, dass** Schritt (b) das Führen des Prozessträgers durch zumindest eine UV-Bestrahlungseinrichtung umfasst, vorzugsweise zunächst durch eine ungekühlte UV-Bestrahlungseinrichtung und anschließend durch eine gekühlte UV-Bestrahlungseinrichtung.

7. Verfahren nach Anspruch 6, **dadurch gekennzeichnet, dass** als U V-Bestrahlungseinrichtungen Niederdruckquecksilberstrahler mit an die Fotoinitiatoren angepassten Wellenlängen verwendet werden, wobei vorzugsweise die UV-Niederdruckquecksilberstrahler in einer Kühlzone zwischen den Luftdüsen angebracht sind.

8. Verfahren nach einem der vorstehenden Ansprüche, **dadurch gekennzeichnet, dass** das in Schritt (c) vorgesehene Abziehen des Polymerisates vom Prozessträger durch Einziehen des Polymerisates mithilfe der Schnecken eines Zweiwellenkneters mit Austragsschnecke geschieht, wobei die Austragsschnecke die in Schritt (d) vorgesehene Überführung des Polymerisates in eine Mischvorrichtung leistet.

9. Verfahren nach einem der vorstehenden Ansprüche, **dadurch gekennzeichnet, dass** das in Schritt (c) vorgesehene Abziehen des Polymerisates vom Prozessträger über antiadhäsive Rollen erfolgt und dass über weitere antiadhäsive Rollen, die zum Teil angetrieben sein können, ein Ausformen des Polymerisates zu einem Strang erfolgt, der, wie im Schritt (d) vorgesehen, in eine Mischvorrichtung überführt wird.

10. Verfahren nach einem der vorstehenden Ansprüche, **dadurch gekennzeichnet, dass** die in Schritt (d) vorgesehene Überführung des Polymerisates in eine Mischvorrichtung mithilfe von Rollenmessem geschieht, die das Polymerisat in Längsstreifen schneiden ohne den Prozessträger durchzutrennen und mithilfe von antiadhäsiven Rollen, die die Polymerisatstreifen entsprechend Schritt (c) vom Prozessträger abziehen und zum Einzug des Mischaggregates leiten.

11. Verfahren nach einem der vorstehenden Ansprüche, **dadurch gekennzeichnet, dass** das Mischen des Polymerisates mit den weiteren Komponenten in einem Doppelschneckenextruder oder Planetwalzenextruder vorgenommen wird.

12. Verfahren nach einem der vorstehenden Ansprüche, **dadurch gekennzeichnet, dass** Schritt (f)
die Reduzierung von Restmonomeren umfasst,
die Beschichtung auf einen bandförmigen Träger zur Herstellung eines Klebebandes umfasst und/oder
eine Massepufferung vor einer Weiterverarbeitung einschließt.

13. Vorrichtung zur kontinuierlichen, lösungsmittelfreien Herstellung von Acrylathaftklebemassen nach einem der Ansprüche 1 bis 12, umfassend
(a) eine Einrichtung (5) zum kontinuierlichen Beschichten eines Gemisches auf den Prozessträger (1);
(b) zumindest eine UV-Bestrahlungseinrichtung (10) zum Polymerisieren des beschichteten Gemisches durch Bestrahlen der beschichteten Abschnitte des Prozessträgers (1) mit ultraviolettem Licht;
(c) eine Einrichtung (14) zum Trennen des in Schritt (b) erhaltenen Polymerisates von dem Prozessträger;
(d) eine Einrichtung zum Überführen des Polymerisates in eine Mischvorrichtung,
(e) eine Einrichtung (15) zum Mischen des Polymerisates mit weiteren Komponenten und
(f) gegebenenfalls eine Einrichtung zur Weiterverarbeitung des Polymerisat-Komponenten-Gemisches.

14. Vorrichtung nach Anspruch 13, **dadurch gekennzeichnet, dass** der Prozessträger (1) ein bandförmiges Trägermaterial ist.

15. Vorrichtung nach einem der Ansprüche 13 oder 14, **dadurch gekennzeichnet, dass** sie eine Abwickelrolle (2) und eine Aufwickelrolle (3) für den Prozessträger (1) umfasst, wobei der Prozessträger (1) mittels Walzen (4) durch die Einrichtungen (a) bis (c) geführt wird.

16. Vorrichtung nach einem der Ansprüche 13 bis 15, **dadurch gekennzeichnet, dass** die Einrichtung (5) zum kontinuierlichen Beschichten eines Gemisches auf den Prozessträger einen Streichbalken umfasst.

17. Vorrichtung nach einem der Ansprüche 13 bis 16, **dadurch gekennzeichnet, dass** die UV-Bestrahlungseinrichtung (10) einen Kühlkanal aufweist, durch den der beschichtete Prozessträger (1) geführt wird.

18. Vorrichtung nach einem der Ansprüche 13 bis 17, **dadurch gekennzeichnet, dass** die UV-Bestrahlungseinrichtungen Niederdruckquecksilberstrahler mit an die Fotoinitiatoren angepassten Wellenlängen aufweisen, wobei vorzugsweise die UV-Niederdruckquecksilberstrahler in einem Kühlkanal zwischen den Luftdüsen angebracht sind

19. Vorrichtung nach einem der Ansprüche 13 bis 18, **dadurch gekennzeichnet, dass** die Einheit zum in Schritt (c) vorgesehene Abziehen des Polymerisates vom Prozessträger ein Zweischneckenkneter ist und dass die Einheit zu der in Schritt (d) vorgesehene Überführung des Polymerisates in eine Mischvorrichtung eine Austragsschnecke hat.

20. Vorrichtung nach einem der Ansprüche 13 bis 19, **dadurch gekennzeichnet, dass** die Einheit zum in Schritt (c) vorgesehene Abziehen des Polymerisates vom Prozessträger und zum Strangformen wie auch zum in Schritt (d) vorgesehene Überführung des Polymerisates in eine Mischvorrichtung antiadhäsiven Rollen, die zum Teil angetrieben sind, hat.

21. Vorrichtung nach einem der Ansprüche 13 bis 20, **dadurch gekennzeichnet, dass** die Einheit zur in Schritt (d) vorgesehene Überführung des Polymerisates in eine Mischvorrichtung eine Einheit mit Rollenmessern ist, die das Polymerisat in Längsstreifen schneidet ohne den Prozessträger durchzutrennen und antiadhäsive Rollen besitzt, die die Polymerisatstreifen entsprechend Schritt (c) vom Prozessträger abziehen und zum Einzug des Mischaggregates leiten.

22. Vorrichtung nach einem der Ansprüche 13 bis 21, **dadurch gekennzeichnet, dass** die Einheit zur Reduzierung von Restmonomeren ein Entgasungsextruder, die Einrichtung (15) zum Mischen des Polymerisates mit weiteren Komponenten ein Doppelschneckenextruder oder Planetwalzenextruder,
die Einrichtung zur Weiterverarbeitung des Polymerisat-Komponenten-Gemisches ein Walzenauftragswerk oder eine Düse und/oder
die Einrichtung zum Zwischenspeichern des Polymerisat-Komponenten-Gemisches ein temperierter Puffer mit kurzen Verweilzeiten ist.

## Claims

1. Method for the solvent-free production of pressure-sensitive acrylate adhesives, comprising
(a) continuous coating of a mixture comprising one or more photoinitiators and also a monomer mixture which comprises
(i) 70% to 100% by weight of compounds from the group of (meth)acrylic acid and also derivatives thereof, corresponding to the following general formula 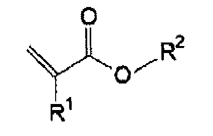 where R₁ is H or CH₃ and R₂ is an alkyl chain having 2 to 20 carbon atoms;
(ii) 0% to 30% by weight of olefinically unsaturated monomers having functional groups; and
(iii) if desired, further components,
or a prepolymer of this monomer mixture, onto a process liner;
(b) polymerization of the coated mixture by irradiation of the coated sections of the process liner with visible or ultraviolet light;
(c) separation of the polymer from the process liner and shaping of the polymer;
(d) transfer of the polymer to a mixing device;
(e) mixing of the polymer with further components such as resins, fillers, crosslinkers and mixtures in a mixing device; and
(f) further processing of the polymer/components mixture obtained in step (e).

2. Method according to Claim 1, **characterized in that** the first photoinitiator is used in a fraction of 0.05% to 2% by weight, preferably of 0.1% to 1% by weight, based on the monomer mixture.

3. Method according to Claim 1 or 2, **characterized in that** the prepolymer is prepared from the monomer mixture, the monomer mixture comprising as further component (iii) a second photoinitiator, the prepolymer preferably being prepared in a downflow reactor.

4. Method according to any of the preceding claims, **characterized in that** the viscosity of the mixture applied in step (a) to the process liner is made such that it is spreadable.

5. Method according to any of the preceding claims, **characterized in that** step (b) is carried out in an inert atmosphere.

6. Method according to any of the preceding claims, **characterized in that** step (b) comprises the passing of the process liner through at least one UV irradiation facility, preferably first through an uncooled UV irradiation facility and subsequently through a cooled UV irradiation facility.

7. Method according to Claim 6, **characterized in that** UV irradiation facilities used are low-pressure mercury lamps having wavelengths adapted to the photoinitiators, the low-pressure mercury UV- lamps preferably being mounted in a cooling zone between the air jets.

8. Method according to any of the preceding claims, **characterized in that** the step (c) removal of the polymer from the process liner is accomplished by drawing-in of the polymer using the screws of a twin-screw extruder with a discharge screw, the discharge screw performing the step (d) transfer of the polymer into a mixing device.

9. Method according to any of the preceding claims, **characterized in that** the step (c) removal of the polymer from the process liner takes place via antiadhesive rolls and **in that** shaping of the polymer to a strand takes place via further antiadhesive rolls, which in part may be driven, said strand being transferred, as per step (d), into a mixing device.

10. Method according to any of the preceding claims, **characterized in that** the step (d) transfer of the polymer into a mixing device is accomplished using roll knives which slit the polymer into elongated strips without severing the process liner, and using antiadhesive rolls which remove the polymer strips from the process liner as per step (c) and pass them to the intake of the mixing assembly.

11. Method according to any of the preceding claims, **characterized in that** the mixing of the polymer with the further components is performed in a twin-screw extruder or planetary roller extruder.

12. Method according to any of the preceding claims, **characterized in that** step (f) comprises the depletion of residual monomers, comprises coating onto a tapelike carrier for the purpose of producing an adhesive tape, and/or includes a holdup of composition prior to further processing.

13. Device for the continuous, solvent-free production of pressure-sensitive acrylate adhesives according to any of Claims 1 to 12, comprising
(a) a facility (5) for continuously coating a mixture onto the process liner (1);
(b) at least one UV irradiation facility (10) for polymerizing the coated mixture by irradiating the coated sections of the process liner (1) with ultraviolet light;
(c) a facility (14) for separating the polymer obtained in step (b) from the process liner;
(d) a facility for transferring the polymer into a mixing device,
(e) a facility (15) for mixing the polymer with further components, and
(f) if desired a facility for further-processing the polymer/components mixture.

14. Device according to Claim 13, **characterized in that** the process liner (1) is a tapelike carrier material.

15. Device according to either of Claims 13 and 14, **characterized in that** it comprises an unwind roll (2) and a winding roll (3) for the process liner (1), the process liner (1) being guided by means of rollers (4) through the facilities (a) to (c).

16. Device according to any of Claims 13 to 15, **characterized in that** the facility (5) for continuously coating a mixture onto the process liner comprises a coating bar.

17. Device according to any of Claims 13 to 16, **characterized in that** the UV irradiation facility (10) has a cooling tunnel through which the coated process liner (1) is passed.

18. Device according to any of Claims 13 to 17, **characterized in that** the UV irradiation facilities have low-pressure mercury lamps having wavelengths adapted to the photoinitiators, the low-pressure mercury UV lamps preferably being mounted in a cooling tunnel between the air jets.

19. Device according to any of Claims 13 to 18, **characterized in that** the unit for the step (c) removal of the polymer from the process liner is a twin-screw extruder and **in that** the unit for the step (d) transfer of the polymer into a mixing device has a discharge screw.

20. Device according to any of Claims 13 to 19, **characterized in that** the unit for the step (c) removal of the polymer from the process liner and for strand-forming and also for the step (d) transfer of the polymer into a mixing device has antiadhesive rolls, which in part are driven.

21. Device according to any of Claims 13 to 20, **characterized in that** the unit for the step (d) transfer of the polymer into a mixing device is a unit having roll knives which slits the polymer into elongated strips without severing the process liner, and possesses antiadhesive rolls which take off the polymer strips from the process liner as per step (c) and pass them to the intake of the mixing assembly.

22. Device according to any of Claims 13 to 21, **characterized in that** the unit for depletion of residual monomers is a devolatilizing extruder, the facility (15) for mixing the polymer with further components is a twin screw extruder or planetary roller extruder, the facility for further-processing the polymer/components mixture is a roller applicator or a nozzle, and/or the facility for temporarily storing the polymer/components mixture is a thermally conditioned holdup means with short residence times.

## Revendications

1. Procédé pour la production exempte de solvant de masses autoadhésives d'acrylate, comprenant
(a) le revêtement continu d'un mélange, contenant un ou plusieurs photo-initiateurs ainsi qu'un mélange de monomère, contenant
(i) 70 à 100% en poids de composés du groupe de l'acide (méth)acrylique ainsi que de ses dérivés selon la formule générale suivante 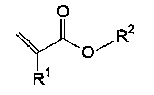 où R₁ représente H ou CH₃ et R₂ représente une chaîne alkyle comprenant 2 à 20 atomes de carbone ;
(ii) 0 à 30% en poids de monomères oléfiniquement insaturés avec des groupes fonctionnels ; et
(iii) le cas échéant d'autres composants,
ou d'un prépolymère de ce mélange de monomères sur un support de procédé ;
(b) la polymérisation du mélange revêtu par irradiation des sections revêtues du support de procédé par de la lumière visible ou ultraviolette ;
(c) la séparation du polymère du support de procédé et le façonnage du polymère ;
(d) le transfert du polymère dans un dispositif de mélange ;
(e) le mélange du polymère avec d'autres composants tels que des résines, des charges, des réticulants et des mélanges dans un dispositif de mélange ; et
(f) la transformation ultérieure du mélange polymère-composants obtenu dans l'étape (e).

2. Procédé selon la revendication 1, **caractérisé en ce que** le premier photo-initiateur est utilisé en une proportion de 0,05 à 2% en poids, de préférence de 0,1 à 1% en poids par rapport au mélange de monomères.

3. Procédé selon la revendication 1. ou 2, **caractérisé en ce que** le prépolymère est préparé à partir du mélange de monomères, où le mélange de monomères contient comme autre composant (iii) un deuxième photo-initiateur, le prépolymère étant de préférence préparé dans un réacteur à flux tombant.

4. Procédé selon l'une quelconque des revendications précédentes, **caractérisé en ce que** la viscosité du mélange qui est appliqué dans l'étape (a) sur le support de procédé est réglée de manière telle qu'on peut l'enduire.

5. Procédé selon l'une quelconque des revendications précédentes, **caractérisé en ce que** l'étape (b) est réalisée dans une atmosphère inerte.

6. Procédé selon l'une quelconque des revendications précédentes, **caractérisé en ce que** l'étape (b) comprend le guidage du support de procédé au travers d'au moins une dispositif d'irradiation par des UV, de préférence d'abord au travers d'un dispositif d'irradiation par des UV non refroidi, puis d'un dispositif d'irradiation par des UV refroidi.

7. Procédé selon la revendication 6, **caractérisé en ce qu'**on utilise comme dispositifs d'irradiation par des UV des émetteurs au mercure basse pression avec des longueurs d'onde adaptées aux photo-initiateurs, où les émetteurs d'UV au mercure basse pression sont de préférence disposés dans une zone de refroidissement entre les injecteurs d'air.

8. Procédé selon l'une quelconque des revendications précédentes, **caractérisé en ce que** la séparation prévue dans l'étape (c) du polymère du support de procédé est réalisée par introduction du polymère à l'aide des vis d'un malaxeur à deux arbres avec vis d'évacuation, où la vis d'évacuation effectue le transfert prévu dans l'étape (d) du polymère dans un dispositif de mélange.

9. Procédé selon l'une quelconque des revendications précédentes, **caractérisé en ce que** la séparation prévue dans l'étape (c) du polymère du support de procédé est réalisée via des rouleaux antiadhésifs et **en ce qu'**un façonnage du polymère en un brin est réalisé sur d'autres rouleaux antiadhésifs qui peuvent être partiellement entraînés, ledit brin étant transféré, comme prévu dans l'étape (d), dans un dispositif de mélange.

10. Procédé selon l'une quelconque des revendications précédentes, **caractérisé en ce que** le transfert prévu dans l'étape (d) du polymère dans un dispositif de mélange est réalisé à l'aide de couteaux rotatifs, qui coupent le polymère en bandes longitudinales sans découper le support de procédé et à l'aide de rouleaux antiadhésifs, qui séparent les bandes de polymère selon l'étape (c) du support de procédé et les guident pour l'introduction dans l'appareil de mélange.

11. Procédé selon l'une quelconque des revendications précédentes, **caractérisé en ce que** le mélange du polymère avec les autres composants est réalisé dans une extrudeuse à double vis sans fin ou une extrudeuse à cylindres planétaires.

12. Procédé selon l'une quelconque des revendications précédentes, **caractérisé en ce que** l'étape (f)
comprend la réduction des monomères résiduels,
comprend le revêtement sur un support en forme de bande pour la production d'une bande adhésive et/ou comprend un stockage tampon avant un traitement ultérieur.

13. Dispositif pour la production continue exempte de solvant de masses autoadhésives d'acrylate selon l'une quelconque des revendications 1 à 12, comprenant
(a) un dispositif (5) pour le revêtement continu d'un mélange sur le support de procédé (1) ;
(b) au moins un dispositif d'irradiation par des UV (10) pour la polymérisation du mélange revêtu par irradiation des sections revêtues du support de procédé (1) par de la lumière ultraviolette ;
(c) un dispositif (14) pour la séparation du polymère obtenu dans l'étape (b) du support de procédé ;
(d) un dispositif pour le transfert du polymère dans un dispositif de mélange,
(e) un dispositif (15) pour le mélange du polymère avec d'autres composants et
(f) le cas échéant un dispositif pour la transformation ultérieure du mélange polymère-composants.

14. Dispositif selon la revendication 13, **caractérisé en ce que** le support de procédé (1) est un matériau support en forme de bande.

15. Dispositif selon l'une quelconque des revendications 13 ou 14, **caractérisé en ce qu'**il comprend un rouleau dérouleur (2) et un rouleau enrouleur (3) pour le support de procédé (1), le support de procédé (1) étant guidé au moyen de cylindres (4) au travers des dispositifs (a) à (c).

16. Dispositif selon l'une quelconque des revendications 13 à 15, **caractérisé en ce que** le dispositif (5) pour le revêtement continu d'un mélange sur le support de procédé comprend une barre d'enduction.

17. Dispositif selon l'une quelconque des revendications 13 à 16, **caractérisé en ce que** le dispositif d'irradiation par des UV (10) présente un canal de refroidissement au travers duquel est guidé le support de procédé (1) revêtu.

18. Dispositif selon l'une quelconque des revendications 13 à 17, **caractérisé en ce que** les dispositifs d'irradiation par des UV présentent des émetteurs au mercure basse pression avec des longueurs d'onde adaptées aux photo-initiateurs, où les émetteurs d'UV au mercure basse pression sont de préférence disposés dans un canal de refroidissement entre les injecteurs d'air.

19. Dispositif selon l'une quelconque des revendications 13 à 18, **caractérisé en ce que** l'unité pour la séparation prévue dans l'étape (c) du polymère du support de polymère est un malaxeur à deux vis et **en ce que** l'unité pour le transfert prévu dans l'étape (d) du polymère dans un dispositif de mélange présente une vis d'évacuation.

20. Dispositif selon l'une quelconque des revendications 13 à 19, **caractérisé en ce que** l'unité pour la séparation prévue dans l'étape (c) du polymère du support de polymère et pour le façonnage en brin ainsi que pour le transfert prévu dans l'étape (d) du polymère dans un dispositif de mélange présente des rouleaux antiadhésifs qui sont entraînés en partie.

21. Dispositif selon l'une quelconque des revendication 13 à 20, **caractérisé en ce que** l'unité pour le transfert prévu dans l'étape (d) du polymère dans un dispositif de mélange est une unité avec des couteaux rotatifs, qui coupent le polymère en bandes longitudinales sans découper le support de procédé et présente des rouleaux antiadhésifs, qui séparent les bandes de polymère selon l'étape (c) du support de procédé et les guident pour l'introduction dans l'appareil de mélange.

22. Dispositif selon l'une quelconque des revendications 13 à 21, **caractérisé en ce que** l'unité pour la réduction des monomères résiduels est une extrudeuse de dégazage, le dispositif (15) pour le mélange du polymère avec d'autres composants est une extrudeuse à double vis sans fin ou une extrudeuse à cylindres planétaires,
le dispositif pour la transformation ultérieure du mélange polymère-composants est un dispositif d'application à cylindres ou un pulvérisateur et/ou le dispositif pour le stockage intermédiaire du mélange polymère-composants est un tampon thermostatisé avec des temps de séjour courts.
